# EUROPÄISCHE PATENTSCHRIFT

(11) **EP 1 271 335 B1**
(45) Veröffentlichungstag und Bekanntmachung des Hinweises auf die Patenterteilung: **01.07.2009**
(21) Anmeldenummer: 02011970.7
(22) Anmeldetag: 29.05.2002
(51) Int. Cl.: G06F 13/42, G05B 19/04

(54) **Verfahren zur Unterstützung des unterbrechbaren, geschachtelten konsistenten Datenaustausches**
Method for supporting interruptable nested consistent data transfers
Méthode pour supporter des échanges de données interruptibles, imbriqués et cohérents

(30) Priorität: 05.06.2001 DE 10127264
(43) Veröffentlichungstag der Anmeldung: 02.01.2003
(73) Patentinhaber: SIEMENS AKTIENGESELLSCHAFT, 80333 München (DE)
(72) Erfinder: Ritzer, Josef, 76149 Karlsruhe (DE); Trapp, Lothar, 90537 Feucht (DE)

(56) Entgegenhaltungen:
- EP-A1- 0 525 214
- EP-A2- 0 791 874
- WO-A-01/15384

## Beschreibung

### Technisches Gebiet

Die Erfindung betrifft ein Verfahren zur Unterstützung des unterbrechbaren, geschachtelten konsistenten Datenaustausches zwischen einer Master-Einheit mit fest priorisierten Tasks und Slave-Einheiten.

### Stand der Technik

Konsistenter Datenaustausch zwischen Master-Einheiten und Slave-Einheiten für Byte, Wort und Doppelwort ist nach dem heutigen Stand der Technik durch Direktperipheriezugriffsbefehle und deren impliziten Unterbrechungsschutz gegeben. Der inkonsistente Zugriff auf Teildaten bei Worten und Doppelworten ist hierbei möglich.

Allerdings ist ein konsistenter Datenaustausch zwischen Master-Einheiten und Slave-Einheiten für konsistente Daten größer 4 Byte nach dem Stand der Technik nur durch Abbildung in Datensätze und Benutzung eines so genannten P-Bus-Protokolls (protokoll-gestützter Datenaustausch) möglich. Auf diese Daten oder deren Teildaten sind keine Direktperipheriezugriffe möglich.

Das P-Bus-Protokoll ist ein Protokoll zum konsistenten Austausch von Datensätzen zwischen Master- und Slave-Einheiten. Es ist jedoch nicht das einzig mögliche protokoll-gestützte Datenaustausch-Verfahren. Im Weiteren werden daher auch die Begriffe DS- und DS-Auftrag-Protokoll verwendet.

Der protokoll-gestützte konsistente Datenaustausch ist notwendig, weil an einem bis 600 m langen multimasterfähigen BUS Zugriffszeiten von bis zu 20 µs auftreten. Ununterbrechbare Datentransfers sind wegen der Einhaltung der BUS-Spezifikationen (zulässige BUS-Lockzeiten maximal 80 µs), der Slave-Eigenschaften (individuelle max. Lockzeiten des Dual-Port-RAMs der Slave-Einheiten) und der Master-Eigenschaften (z. B. Alarmreaktionszeiten) limitiert.

### Darstellung der Erfindung

Das der Erfindung zugrunde liegende technische Problem besteht darin, ein Verfahren zur Verfügung zu stellen, bei dem für eine Slave-Einheit, die sowohl in einem CR (CentralRack), in einem nahgekoppelten ER (ExtentionRack) als auch in einem 600 m entfernten ER (ExtentionRack) steckbar sein soll, konsistente Daten projektierbar und nutzbar sind.

Dieses technische Problem wird durch ein Verfahren mit den Merkmalen des Anspruchs 1 gelöst. Der Erfindung liegt der Gedanke zugrunde, den konsistenten Datentausch mit unterschiedlich effizienten Mechanismen (ununterbrechbar mit BUSLOCK, unterbrechbar mit protokoll-gesteuertem Datenaustausch) von der Master- und von den betroffenen Slave-Einheiten derart zu unterstützen, dass der Austausch konsistenter Daten zwischen einer Master-Einheit und einer Slave-Einheit abhängig von der Zugriffszeit, die wiederum von der Topologie abhängig ist, durch Anwendung unterschiedlicher Mechanismen (BUSLOCK, P-Bus-Protokoll) zeitoptimal und systemverträglich durchgeführt werden kann. Zudem wird der inkonsistente Zugriff auf die Daten ermöglicht und die heutige Trennung der konsistenten Daten (größer 4 Byte) von den inkonsistenten Daten aufgehoben.

Die zulässige Anzahl von Zugriffen unter BUSLOCK multipliziert mit der Bytebreite des Busses ergibt die maximal mögliche Länge konsistent austauschbarer Daten zwischen CPU und einer Partner-Baugruppe (z. B. I/O). Für den Austausch größerer konsistenter Datenmengen ist die Verwendung eines protokoll-gestützten Konsistenzsicherungsmechanismus vorzusehen.

Slave-seitig werden die konsistenten Daten größer 4 Byte und die konsistenten Daten kleiner 4 Byte, soweit sie in den einheitlich großen P-BUS-Adressraum (128 Byte DualPortRam) der Slave-Einheiten passen, zusammengeführt. Möglich werden damit auch inkonsistente Direktperipheriezugriffe und die Einbeziehung des konsistenten Datenaustausches in die Prozessabbildaktualisierung. Quelle oder Ziel der konsistenten Daten in der Master-Einheit ist u.a. ein Prozessabbildbereich (CommonData), den die priorisierten Tasks gemeinsam benutzen und zu unterschiedlichen Zeitpunkten partiell und konkurrierend durch konsistenten Datenaustausch aktualisieren.

Unabhängig vom Konsistenzsicherungsmechanismus wird gewährleistet, dass die Datenkonsistenz auch bei Unterbrechung durch höherpriore Tasks für alle Tasks gegeben ist.

Da der benutzte Konsistenzsicherungsmechanismus vom Projektierungstool für den Anwender transparent ist, dürfen auch beim geschachtelten konsistenten Datenaustausch keine Unterschiede auftreten. D. h., der protokoll-gestützte Konsistenzsicherungsmechanismus ist so festzulegen, dass er bezüglich des konsistenten Datenaustausches dem Konsistenzsicherungsmechanismus mit BUSLOCK gleichwertig ist, d. h. jederzeit für die Tasks der Master-Einheit zu einer identischen Datensicht führt.

Inkonsistentes Lesen und Schreiben auf konsistente Daten einer Slave-Einheit wird nicht berücksichtigt: Inkonsistent auf konsistente Daten einer Slave-Einheit geschriebene Daten vor oder während eines protokoll-gestützten konsistenten Datenaustausches werden mit dem Abschluss des konsistenten Schreibens überschrieben. Inkonsistent in die Master-Einheit eingelesene Daten vor oder während eines protokoll-gestützten konsistenten Datenaustausches werden mit dem Abschluss des konsistenten Schreibens überschrieben.

Des Weiteren sind zur Lösung des technischen Problems Slave-Einheiten vorteilhaft, die, wenn bei ihnen konsistente Daten größer 4 Byte projektierbar sind, diese im direkt adressierbaren Nutzdatenbereich und zusätzlich als Datensätze mit festen (bei Funktionsbaugruppen) oder frei festlegbaren (E/A-Baugruppen) Datensatznummern definieren. Sie unterstützen damit den BUSLOCK-gestützten und den protokoll-gestützten konsistenten Datenaustausch.

Des Weiteren legt das Projektierungstool, das die topologischen Gegebenheiten hinreichend kennt, spezifisch für die einzelnen konsistenten Daten fest, welchen Konsistenzsicherungsmechanismus die Master-Einheit zu benutzen hat. Damit wird, bezogen auf ein konsistentes Datum, entweder der eine oder der andere Konsistenzsicherungsmechanimus benutzt.

Gemäß der vorliegenden Erfindung wird für jede Task der Master-Einheit, die das DS-Protokoll zum konsistenten Datenaustausch oder zum sonstigen Datensatzaustausch benutzen kann, ein Datenpuffer entsprechend der maximalen Länge der Datensätze angelegt. Der master-interne Zugriff auf den Datenpuffer zum Entsorgen (beim Einlesen von konsistenten Daten) und zum Versorgen (beim Ausgeben von konsistenten Daten) ist durch den schnellen master-internen Bus immer ununterbrechbar möglich.

Alle DS-Protokoll-Aufträge werden vorzugsweise in einem abstrakten Datenmodul ausgeführt und verwaltet. Jeder Funktionsaufruf wird als Auftrag verwaltet. Auftragsdaten und Automatenzustand sind im abstrakten Datenmodul taskunabhängig hinterlegt. Die Abwicklung des eigentlichen DS-Protokolls kann somit auch in einer beliebigen höherprioren Task durchgeführt werden. Bei Unterbrechung durch eine noch höherpriore Task kann auch in dieser Task der Datenaustausch fortgesetzt werden. Das Kopieren der Daten vom Datenpuffer in den Zielbereich oder vom Quellbereich in den Datenpuffer erfolgt jedoch ausschließlich in der ausführenden Task, da sich die "Datenbasis" für eine höherpriore Task nur durch Aktivitäten noch höherpriorer Tasks ändern darf.

### Kurze Beschreibung der Zeichnungen

Im Folgenden ist zur weiteren Erläuterung und zum besseren Verständnis ein Ausführungsbeispiel der Erfindung unter Bezugnahme auf die beigefügten Zeichnungen näher erläutert. Es zeigt:
- Figur 1: den Einsatz von Baugruppen in einem CentralRack (CR) und in nah- und ferngekoppelten ExtensionRacks (ER),
- Figur 2: einen Zustandsautomat der Master-Einheit für protokoll-gestütztes konsistentes Schreiben von einer Master- zu einer Slave-Einheit,
- Figur 3: einen Zustandsautomat der Master-Einheit für protokoll-gestütztes konsistentes Lesen von einer Masterzu einer Slave-Einheit,
- Figur 4: den Stand der Technik,
- Figur 5: wie konsistente Daten wahlweise über P-Bus-Protokoll oder P-BUSLOCK konsistent austauschbar sind.

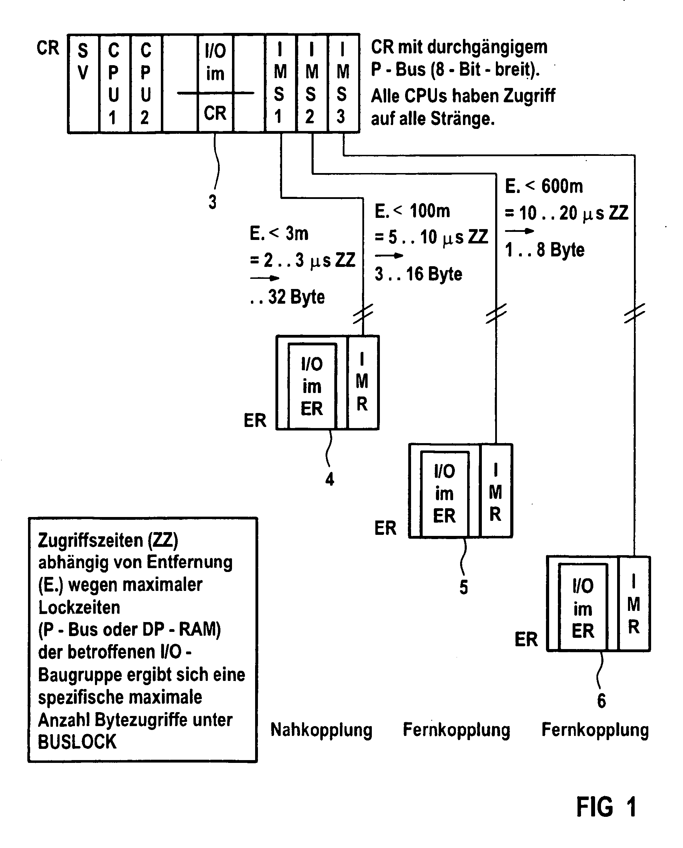

Figur 1 zeigt den Einsatz von Baugruppen in einem CentralRack (CR) (3) und in nah- und ferngekoppelten ExtensionRacks (ER) (4, 5, 6). Die Zugriffszeiten (ZZ) sind abhängig von der Entfernung (E.). Aufgrund der maximalen Lockzeiten (P-Bus oder DP-RAM) der betroffenen I/O-Baugruppe ergibt sich eine spezifische maximale Anzahl von Bytezugriffen unter BUSLOCK.

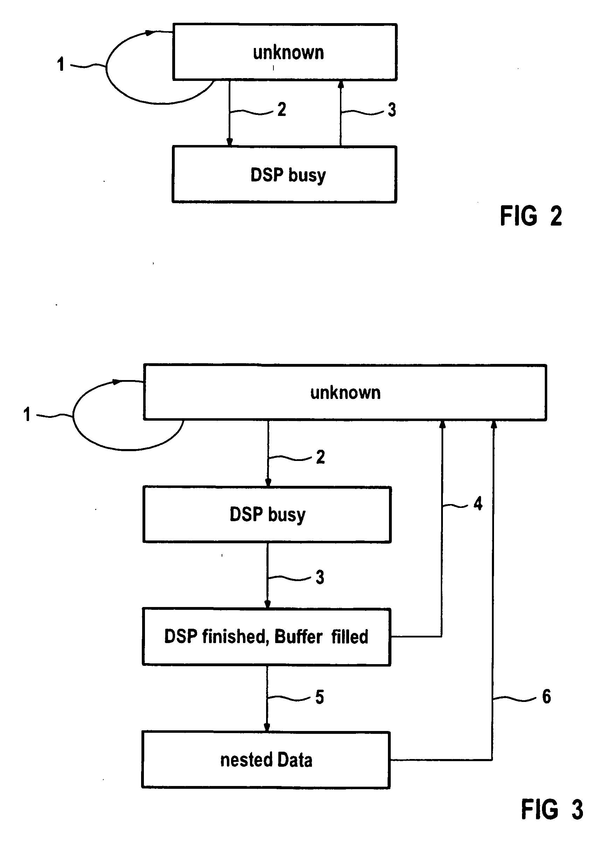

Figur 2 zeigt einen Zustandsautomat der Master-Einheit für protokoll-gestütztes konsistentes Schreiben von einer Masterzu einer Slave-Einheit. Der DS-Protokoll-Start zusammen mit der Versorgung des Datenpuffers und dem Setzen des Auftragsstatus "DSP busy" ist zwingend ununterbrechbar und erfolgt in der aufrufenden Task. Die Abwicklung und Beendigung des eigentlichen Bus-Protokolls kann bei Unterbrechung durch eine höherpriore Task auch in einer höherprioren Task fortgesetzt werden. Das Schreiben von konsistenten Daten in die Slave-Einheit wird in einer höherprioren Task fortgeführt und beendet, wenn in dieser Task ein DS-Protokoll zur gleichen Slave-Einheit begonnen wird. Da zuerst das laufende DS-Protokoll beendet und danach das neue gestartet wird, stehen gegebenenfalls die frei gewordenen Ressourcen zur Verfügung.

Mit dem erfolgreichen DS-Protokoll-Start stellt die Slave-Einheit den Schreibpuffer zur Verfügung. Mit dem Beenden des DS-Protokolls wird der Datensatz ununterbrechbar in den zugeordneten Nutzdatenbereich übertragen.

In Schritt 1 wird das DS-Protokoll eröffnet und damit konsistenter Datenaustausch abgewiesen.
In Schritt 2 wird das DS-Protokoll zur Slave-Einheit erfolgreich eröffnet und die konsistenten Daten im Datenpuffer der Master-Einheit eingetragen.
In Schritt 3 werden dann konsistente Daten in den Zielbereich übertragen und das DS-Protokoll beendet.

Figur 3 zeigt einen Zustandsautomat der Master-Einheit für protokoll-gestütztes konsistentes Lesen von Master- zur Slave-Einheit. Der DS-Protokoll-Start und das Setzen des Auftragsstatus "DSP busy" ist ununterbrechbar. Die Abwicklung des eigentlichen Bus-Protokolls kann bei Unterbrechung durch eine höherpriore Task auch in einer höherprioren Task fortgesetzt werden.

Wird das DS-Protokoll zum Einlesen von konsistenten Daten in den Datenpuffer in einer höherprioren Task fortgeführt, weil ein nächstes DS-Protokoll zu dieser Slave-Einheit gestartet werden soll, so bleiben die Daten mit der Beendigung des DS-Protokolls im Datenpuffer. Ununterbrechbar mit der Beendigung des DS-Protokolls wird der Auftragsstatus "DSP finished, Buffer filled" gesetzt. Die Auftragsdaten bleiben dabei erhalten.

Danach kann für den neuen Auftrag das neue DS-Protokoll gestartet und in gleicher Weise durchgeführt werden.

Ein Auftrag wird ausschließlich von der aufrufenden (initiierenden) Task regulär beendet. Dabei ist zunächst der Auftragsstatus eventuell vorhandener Aufträge zu prüfen und deren Auftragsstatus von "DSP finished, Buffer filled" auf "nested data" zu setzen, wenn die Auftragsdaten bezüglich Quelle (Baugruppe, Datensatz) und Zieldatenbereich mit dem zu beendenden Auftrag übereinstimmen.

Ein Auftrag im Auftragsstatus "DSP finished, Buffer filled" wird beendet, der Datenpuffer ununterbrechbar entsorgt und der Auftrag gelöscht, d. h. der Auftragsstatus auf "unknown" gesetzt. Ein Auftrag im Auftragsstatus "nested data" hingegen wird, ohne die Daten in den Zielbereich zu kopieren, beendet, d. h., es wird nur der Auftragsstatus auf "unknown" gesetzt.

Mit dem erfolgreichen DS-Protokoll-Start stellt die Slave-Einheit den ununterbrechbar gefüllten und damit konsistenten Lesepuffer zur Verfügung.

In Schritt 1 wird das DS-Protokoll eröffnet und damit der Auftrag für konsistentes Lesen abgewiesen. In Schritt 2 wird das DS-Protokoll zur Slave-Einheit erfolgreich eröffnet. In Schritt 3 dann wird das DS-Protokoll von der initiierenden Task oder einer höherprioren Task beendet, Daten liegen im Datenpuffer bereit. In Schritt 4 werden Daten von der initiierenden Task vom Datenpuffer zum Ziel übertragen und der Leseauftrag beendet. In Schritt 5 wird ein identischer Leseauftrag in einer höherprioren Task eingeschachtelt (Daten im Datenpuffer veraltet). In Schritt 6 wird schließlich ein Leseauftrag von der initiierenden Task beendet, ohne die Daten vom Datenpuffer zum Ziel zu übertragen.

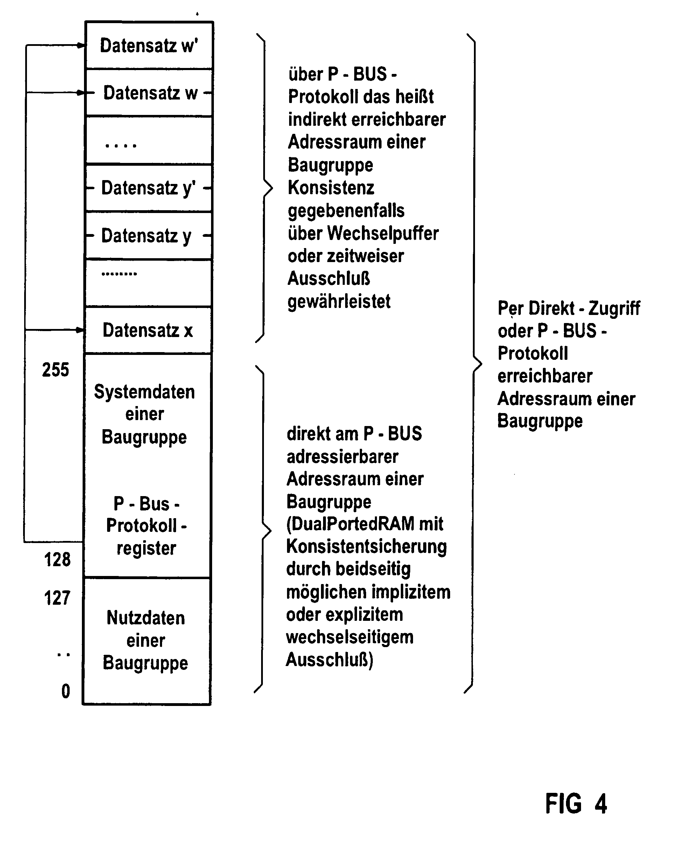

Figur 4 zeigt den bisherigen Stand der Technik, bei dem konsistente Daten größer 4 Byte nur über das P-Bus-Protokoll erreicht werden können. Es ist kein inkonsistenter Direktzugriff über den Nutzdatenadressraum möglich.

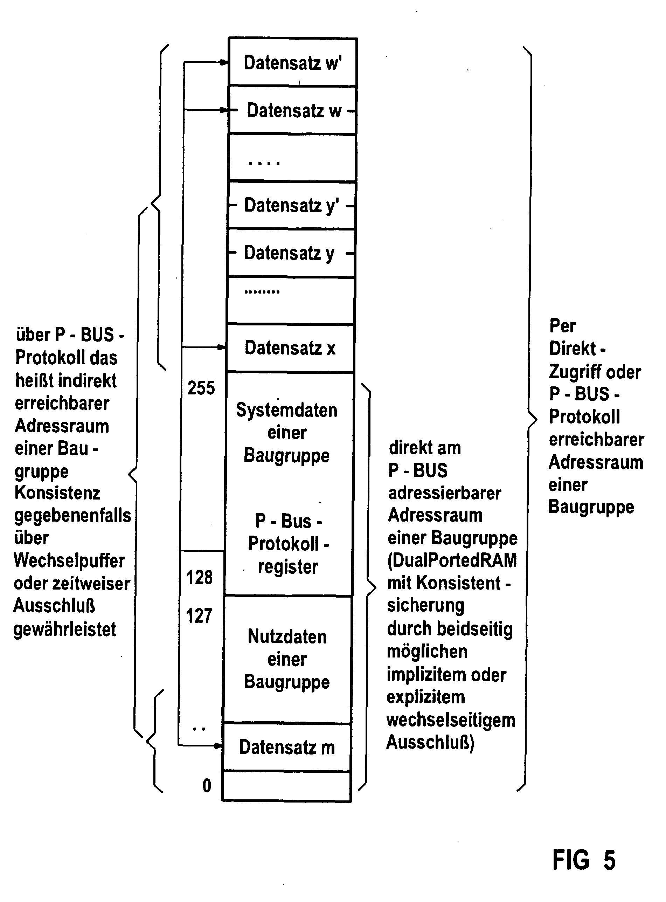

Figur 5 zeigt, wie konsistente Daten wahlweise über das P-Bus-Protokoll oder P-BUSLOCK konsistent austauschbar sind. Zudem ist ein inkonsistenter Direktzugriff möglich.

## Patentansprüche

1. Verfahren zur Unterstützung des unterbrechbaren, geschachtelten konsistenten Datenaustausches zwischen einer Master-Einheit mit fest priorisierten Tasks und Slave-Einheiten, wobei die Slave-Einheiten, wenn bei ihnen konsistente Daten größer 4 Byte projektierbar sind, diese Daten in einem direkt adressierbaren Nutzdatenbereich und zusätzlich als Datensätze mit festen oder frei festlegbaren Datensatznummern definieren, so dass damit der BUSLOCK-gestützte und der protokollgestützte konsistente Datenaustausch unterstützt wird, und das Projektierungstool, das die topologischen Gegebenheiten hinreichend kennt, spezifisch für die einzelnen konsistenten Daten festlegt, welchen Konsistenzsicherungsmechanismus die Master-Einheit zu verwenden hat, wobei für jede Task der Master-Einheit, die das DS-Protokoll zum konsistenten Datenaustausch oder zum sonstigen Datenaustausch verwenden kann, was bedeutet, dass ein protokoll-gestütztes Datenaustausch-Verfahren verwendet werden kann, ein Datenpuffer entsprechend der maximalen Länge der Datensätze angelegt wird, wobei der master-interne Zugriff auf den Datenpuffer beim Einlesen von konsistenten Daten und beim Ausgeben von konsistenten Daten durch den schnellen master-internen Bus immer ununterbrechbar möglich ist.

2. Verfahren nach Anspruch 1, **dadurch gekennzeichnet, dass** alle DS-Protokoll-Aufträge in einem abstrakten Datenmodul ausgeführt und verwaltet werden.

3. Verfahren nach Anspruch 1 oder 2, **dadurch gekennzeichnet, dass** jeder Funktionsaufruf als Auftrag verwaltet wird und die Auftragsdaten und der Automatenzustand im abstrakten Datenmodul taskunabhängig hinterlegt werden, so dass die Abwicklung des eigentlichen DS-Protokolls auch in einer beliebigen höherprioren Task durchgeführt werden kann, so dass bei Unterbrechung durch eine noch höherpriore Task der Datenaustausch auch in dieser Task fortgesetzt werden kann.

4. Verfahren nach Anspruch 3, **dadurch gekennzeichnet, dass** das Kopieren der Daten vom Datenpuffer in den Zielbereich oder vom Quellbereich in den Datenpuffer ausschließlich in der ausführenden Task erfolgt.

## Claims

1. Method for supporting the interruptible, nested, consistent exchange of data between a master unit with fixed prioritized tasks and slave units, whereby the slave units, if consistent data greater than 4 bytes is able to be project planned for them, define this data in a directly addressable useful data area and additionally as data records with fixed or freely-definable data record numbers, so that this supports the BUSLOCK-based and the protocol-based consistent data exchange, and the project planning tool which adequately knows the topological circumstances, defines specifically for the individually consistent data which consistency safeguarding mechanism the master unit has to use, with for each task of the master unit which can use the protocol for consistent data exchange or for other data exchange, which means that a protocol-supported data exchange method can be used, a data buffer corresponding to the maximum length of the data record is created, with the master-internal access being possible to a data buffer on reading in of consistent data and on output of consistent data by the fast master-internal bus is always possible in an interruptible manner.

2. Method in accordance with claim 1, **characterised in that** all DS protocol tasks will be executed and administered in an abstract data module.

3. Method in accordance with claim 1 or 2, **characterised in that** each function call is administered as a task and the task data and the automat state are stored in the abstract data module independent of the task, so that the handling of the actual DS protocol can also be executed in any higher-priority task, so that on interruption by an even higher-priority task the data exchange can also be continued in this task.

4. Method in accordance with claim 3, **characterised in that** the data is copied from the data buffer into the destination area or from the source area into the data buffer exclusively in the executing task.

## Revendications

1. Procédé pour assister l'échange de données interruptible, imbriqué et cohérent entre une unité maître ayant des tâches rendues prioritaires de manière fixe et des unités esclaves, dans lequel les unités esclaves, s'il peut être projeté chez elles des données cohérentes plus grandes que quatre octets, définissent ces données dans une zone de données utiles pouvant être adressées directement et, en outre, en tant que jeux de données ayant des numéros de jeux de données fixes ou pouvant être fixées librement, de manière à assister ainsi l'échange de données assisté par BUSLOCK et cohérent assisté par programme, et l'outil de projet, qui connaît suffisamment les données topologiques, fixe, spécifiquement pour les diverses données cohérentes, le mécanisme de sécurité de cohérence que l'unité maître doit utiliser, dans lequel pour chaque tâche de l'unité maître, qui peut utiliser le programme DS pour l'échange de données cohérent ou un autre échange de données, ce qui signifie qu'un procédé d'échange de données assisté par programme peut être utilisé, un tampon de données correspondant à la longueur maximum des jeux de données est appliqué, dans lequel l'accès, interne au maître, au tampon de données est possible, toujours sans pouvoir être interrompu, par le bus rapide interne au maître, lors de la lecture de données cohérentes et lors de l'émission de données cohérentes.

2. Procédé suivant la revendication 1, **caractérisé en ce que** tous les ordres de programme DS sont réalisés et gérés dans un module de données abstrait.

3. Procédé suivant la revendication 1 ou 2, **caractérisé en ce que** chaque appel de fonction est géré en tant qu'ordre et les données d'ordre et l'état de l'automate sont mémorisés indépendamment de la tâche dans le module de données abstrait, de sorte que le déroulement du programme DS proprement dit peut s'effectuer aussi dans une tâche quelconque de grande priorité de sorte que, lors d'une interruption par une tâche ayant une priorité encore plus grande, l'échange de données peut se produire aussi dans cette tâche.

4. Procédé suivant la revendication 3, **caractérisé en ce que** la copie des données du tampon de données à la zone cible ou de la zone source dans le tampon de données s'effectue exclusivement dans la tâche à exécuter.
